# EUROPÄISCHE PATENTANMELDUNG

(11) **EP 0 927 655 A2**
(43) Veröffentlichungstag der Anmeldung: **07.07.1999**
(21) Anmeldenummer: 98122593.1
(22) Anmeldetag: 04.12.1998
(51) Int. Cl.: B60K 11/08

(54) **Lamellenwand, insbesondere für die Kühlluftzuführung zur Antriebsmaschine eines Fahrzeugs**

(30) Priorität: 02.01.1998 DE 19800055
(71) Anmelder: Volkswagen Aktiengesellschaft, 38436 Wolfsburg (DE)
(72) Erfinder: Rühmann, Bernhard, 38165 Lehre-Essenrode (DE)

(57) **Zusammenfassung**

Bei einer Lamellenwand (3), insbesondere für die Kühlluftzuführung zu einer Kraftfahrzeug-Brennkraftmaschine, führen einander benachbarte Lamellen (4) gegensinnige Schwenkbewegungen aus und/oder sind an ihren Längskanten (6) mit Heizeinrichtungen (7) bestückt. Beides dient dem leichten Entfernen von Eis im Winter.

## Beschreibung

Die Erfindung betrifft eine Lamellenwand gemäß dem Oberbegriff des Patentanspruchs 1. Im bevorzugten Einsatzfall, nämlich im Rahmen der Kühlluftzuführung zu einer flüssigkeitsgekühlten Kraftfahrzeug-Antriebsmaschine, ist diese Lamellenwand in an sich bekannter Weise in Fahrtrichtung vor einem üblichen Kühlwasser-Luft-Wärmetauscher der Maschine angeordnet. Die Erfindung ist jedoch auch in anderen Fällen einserzbar, beilspielsweise im Rahmen einer Frischluftzufuhr zu einem Innenraum eines Kraftfahrzeugs.

Lamellenwände dieses Aufbaus sind aus der Patentliteratur in unterschiedlichen Ausführungen bekannt. Hier seien nur die DE 23 40 497 C2, die DE 38 36 374 A1 und die EP 0 500 430 B1 genannt. Diese Konstruktionen sind auch so getroffen, daß die einander benachbarten Lamellen sich in ihren Schließstellungen im Bereich ihrer Längskanten überlappen, wobei diese gegebenenfalls so profiliert sind, daß die Längskantenbereiche dann gleichsam ineinander verlaufen und demgemäß die Lamellenwand eine glatte und somit strömungsgünstige Oberfläche besitzt. Das Schwenken der Lamellen erfolgt über an ihnen angreifende Schwenkarme, die mit einer längsverschiebbaren Antriebsstange in Verbindung stehen, die ihrerseits von einem Servomotor betätigt wird, und zwar in Abhängigkeit von der Geschwindigkeit des Fahrzeugs, der Temperatur des Antriebsmotors desselben oder des Kühlwassers der Antriebsmaschine. Gemeinsam ist diesem Stand der Technik ferner die Tatsache, daß alle Lamellen der Lamellenwand gleichsinnige Schwenkbewegungen ausführen.

Bekannt sind auch - vergleiche die EP 0 206 299 B1 - Lamellenwände, in denen jeweils zwei Lamellen im Bereich ihrer einander zugekehrten Längskanten scharnierartig verbunden sind, während die einander abgekehrten freien Längskanten dieser beiden Lamellen in einer Längsführung laufen. Die maximale Luftdurchströmung wird dadurch eingestellt, daß die Lamellenpaare durch Annähern ihrer freien Längskanten unter Ausnutzung der scharnierartigen Verbindungen ihrer anderen Längskanten gleichsam zusammengeklappt werden. Bei diesem Konstrukionsprinzip fehlen aber Schwenkachsen für die einzelnen Lamellen im Bereich der Längsachsen derselben.

Die Erfindung bezieht sich auf eine Lamellenwand nach dem zuerst erläuterten Konstruktonsprinzip, das heißt mit individuellen längsachsennahen Schwenkachsen für die einzelnen Lamellen. Insbesondere bei diesem Konstruktionsprinzip, das sich an sich durch große Robustheit und Zuverlässigkeit auszeichnet und mit relativ geringen Verstellkräften bedienbar ist, besteht aber die Gefahr, daß im Winterbetrieb, insbesondere bei längere Zeit in ihren Schließstellungen befindlichen Lamellen, einander benachbarte Lamellen im Bereich ihrer Längskanten durch Eisbildung relativ fest miteinander verbunden werden. Auch durch Aufbringen größerer Verstell-, das heißt Schwenkkräfte auf die Lamellen ist die Entfernung des Eises bzw. die Zerstörung dieses Zusammenhalts zwischen einander benachbarten Lamellen deshalb nur schwer möglich, weil die einander zugekehrten Längskantenbereiche der Lamellen sich zu Beginn der Entfernung voneinander praktisch linear zueinander bewegen, nämlich tangential auf Kreisbögen um die jeweiligen Schwenkachsen. Eine derartige Zugbewegung ist aber kaum geeignet, bei geringem Kraftaufwand eine "Eisverbindung" zwischen den beiden Lamellen zu zerstören.

Der Erfindung liegt die Aufgabe zugrunde, eine gattungsgemäße Lamellenwand unter Wahrung ihrer vorteilhaften Eigenschaften zu schaffen, die ohne Vergrößerung der zur Durchführung der definierten Schwenkbewegungen erforderlichen Verstellkräfte die ebenfalls beschriebene Eisbildung relativ schnell wirkungslos macht.

Die erfindungsgemäße Lösung dieser Aufgabe besteht in den kennzeichnenden Merkmalen der Patentansprüche 1 und 6, wobei darauf hingewiesen sei, daß die Maßnahmen des Anspruchs 6 zwar in besonders vorteilhafter Weise in Kombination mit den Merkmalen des Anspruchs 1 Anwendung finden, jedoch auch dann eine günstige Wirkung hinsichtlich der Lösung der definierten Aufgabe entfalten, wenn sie ohne die Gegenläufigkeit der Schwenkbewegungen einander benachbarter Lamellen gemäß Anspruch 1 Einsatz finden.

Betrachtet man zunächst die Lösung gemäß Anspruch 1, so wird durch die Gegenläufigkeit der Schwenkbewegungen der beiden jeweils einander benachbarten Lamellen eine Relativbewegung zwischen ihren einander zugekehrten, gegebenenfalls durch Vereisung verbundenen Längsbereichen erzielt, die auch eine nennenswerte Querkomponente, das heißt in Richtung parallel zur Ebene der Lamellenwand, besitzt. Dadurch wird eine eventuelle Eiszwischenlage zwischen beiden nicht nur auf Zug, sondern auf Biegung beansprucht, das heißt "gebrochen". Diese Wirkung wird um so leichter erzielt, wenn zugleich die Maßnahme des Anspruchs 6 Einsatz findet, also eine etwa vorhandene Eisschicht durch Wärmezufuhr geschwächt wird.

Ein Ausführungsbeispiel der Erfindung wird im folgenden anhand der Zeichnung erläutert. Es zeigen:
- Figur 1:: perspektivisch schräg von vorn einen zur Aufnahme eines Motors nebst Wärmetauscher bestimmten Vorderwagen eines Kraftfahrzeugs,
- Figur 2:: die in Figur 1 mit II-II bezeichnete Schnittansicht,
- Figur 3:: die Ansicht von unten gemäß dem Pfeil III in Figur 1 und
- Figur 4: eine Seitenansicht eines zur Übertragung der Schwenkkräfte verwendeten Zahnriemens.

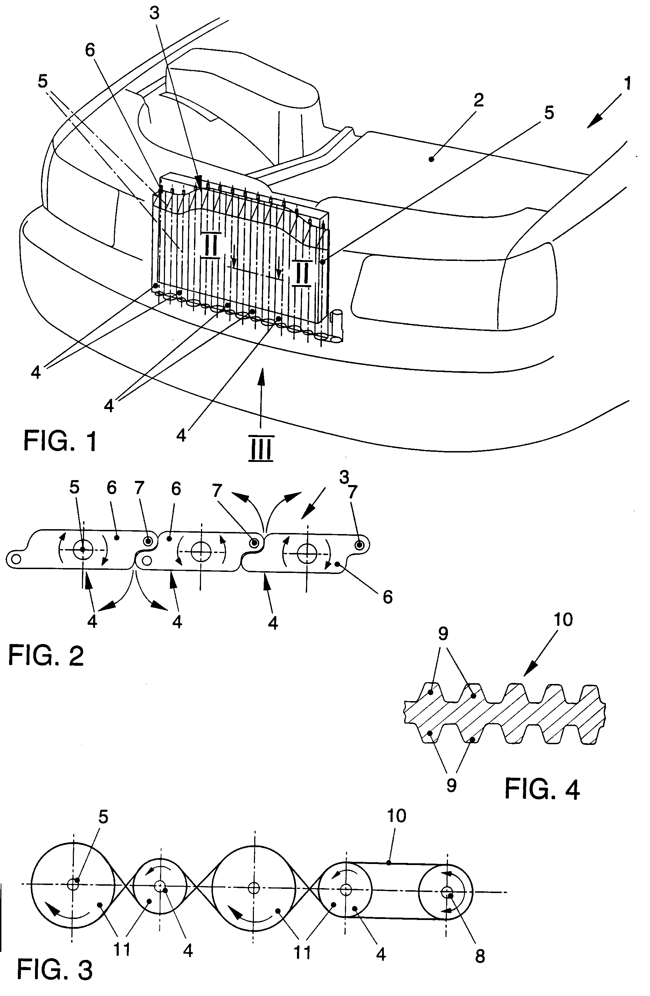

Betrachtet man zunächst Figur 1, so fehlt in der Darstellung des Vorderwagens 1 die Wiedergabe der Brennkraftmaschine nebst Wärmetauscher (Kühler), zu deren Aufnahme der Raum 2 vorgesehen ist.

In Fahrtrichtung vor dem erwähnten Kühler ist die allgemein mit 3 bezeichnete Lamellenwand angeordnet, die aus einer Vielzahl von in diesem Ausführungsbeispiel (aber nicht notwendigerweise) senkrecht angeordneten Lamellen 4 besteht, denen individuelle Schwenkachsen 5 zugeordnet sind. Diese Schwenkachsen 5 sind in einem Rahmen 6 drehbar gelagert, der seinerseits im Vorderwagen 1 ortsfest montiert ist.

Wie aus dem Schnitt II-II, also Figur 2, hervorgeht, in der die Lamellen 4 in ihren Schließstellungen gezeigt sind, sind die einander zugekehrten Längskantenbereiche derselben so profiliert, daß sie ineinandergreifen, wobei jedoch die Profile so gewählt sind, daß Schwenkbewegungen der Lamellen in Richtung der Pfeile in Figur 2 nicht behindert werden. Durch diese Profilierungen entstehen glatte und damit strömungsgünstige Oberflächen der Lamellenwand 3, so daß ein strömungsgünstiger Verlauf erzielt ist.

Erfindungsgemäß werden die Lamellen 4 zum Zwecke der teilweisen oder vollständigen Freigabe der Kühlluftzufuhr entsprechend den Pfeilen in Figur 2 so verschwenkt, daß einander benachbarte Lamellen gegensinnige Schwenkbewegungen ausführen. Die damit verbundene Beanspruchung von Eisschichten im Bereich der einander zugekehrten Längsseiten 6 führt auch bei geringer Schwenkkraft zur Zerstörung dieser Eisschichten und damit zur Aufhebung einer unerwünschten Verbindung einander benachbarter Lamellen 4 durch die Eisschicht.

In dem gezeigten Ausführungsbeispiel sind in den Längskantenbereichen ferner Heizdrähte 7 untergebracht, die von der Bordbatterie des Fahrzeugs gespeist werden und dafür sorgen, daß durch Wärmezufuhr die "Vereisung" einander benachbarter Lamellen 4 zumindest geschwächt wird. Verständlicherweise können hier statt elektrischer Heizdrähte auch andere Heizeinrichtungen Einsatz finden, beispielsweise Wärmespeichermaterialien, wobei jedoch der Aufwand für elektrische Heizeinrichtungen der geringste sein wird.

Der Schwenkantrieb für die Lamellen 4 enthält beispielsweise einen elektrischen Antriebsmotor; es können jedoch auch Druckmittelantriebe Einsatz finden. Entsprechende Lösungen sind dem Fachmann beispielsweise aus der zitierten Patentliteratur bestens bekannt. In der Darstellung der Figuren 3 und 4 ist ein Drehantrieb mit der Abtriebsachse 8 angenommen, der, wie der Doppelpfeil andeutet, zwei gegenläufige Drehrichtungen besitzt, nämlich eine zum Verschwenken der Lamellen 4 aus ihrer Schließlage und eine zum Schwenken der Lamellen in ihre Schließlage. Zur Übertragung der Verstellkräfte von der Abtriebsachse 8 des Antriebsmotors dient in diesem Ausführungsbeispiel der doppelseitige, das heißt sowohl auf seiner Innen- als auch auf seiner Außenseite mit Zähnen 9 (Figur 4) versehene endlose Zahnriemen 10. Er umschlingt auf abwechselnden Seiten Umfangsbereiche von Zahnscheiben oder Zahnrädern 11, die drehfest mit den Schwenkachsen 5 verbunden sind, die ihrerseits schwenkfest mit jeweils einer der Lamellen 4 gekoppelt sind. Dadurch ist, wie auch die Pfeile in Figur 3 andeuten, die Gegenläufigkeit der Schwenkbewegungen einander benachbarter Lamellen 4 erreicht.

In dem Ausführungsbeispiel nach Figur 3 sind ferner Zahnscheiben 11 mit unterschiedlichen Durchmessern angenommen, so daß bei einander benachbarten Lamellen 4 unterschiedliche Schwenkgeschwindigkeiten und Schwenkwinkel erreicht werden. Dies erleichtert das Freikommen benachbarter Lamellen zu Beginn der Schwenkbewegungen.

Verständlicherweise sind auch andere Übertragungsmittel für die Verstellbewegungen des Verstellmotors auf die Schwenkachsen denkbar, beispielsweise kämmende Zahnräder, von denen das in Figur 3 am weitesten rechts befindliche mit einem Zahnrad auf der Abtriebswelle 8 des Antriebsmotors kämmt. Die Verwendung eines Riemens, insbesondere eines Zahnriemens, bietet jedoch Vorteile hinsichtlich der Freiheit der verschiedenen Abmessungen.

Wenn im Rahmen der bisherigen Beschreibung die Lamellenwand stets als Einrichtung zur Beeinflussung einer Luftdurchströmung beschrieben wurde, so ist evident, daß, sie auch die Wirkung einer Verringerung der Schallabstrahlung hat.

Mit der Erfindung ist demgemäß mit einfachsten Mitteln eine gattungsgemäße Lamellenwand geschaffen, die selbsttätig eine sonst störende Vereisung im Bereich der einander zugekehrten Längskanten benachbarter Lamellen zerstört.

## Patentansprüche

1. Lamellenwand zur Einstellung unterschiedlicher Luftdurchströmungen, insbesondere für die Kühlluftzuführung zur Antriebsmaschine eines Fahrzeugs, mit mehreren Lamellen, die mittels im Bereich der Lamellenlängsachsen angreifender individueller, paralleler und in einem starren Rahmen gelagerter Schwenkachsen und eines den Lamellen gemeinsamen Schwenkantriebs zwischen maximalen Öffnungsstellungen - dann existieren zwischen einander benachbarten Lamellen Strömungsspalte maximaler Spaltweite - und Schließstellungen - dann existieren zwischen einander benachbarten Lamellen keine Strömungsspalte - in dem Rahmen schwenkbar sind, dadurch gekennzeichnet, daß der Antrieb (8) in bei einander benachbarten Lamellen (4) gegensinnige Schwenkbewegungen hervorrufender Wirkverbindung mit den Lamellen (4) steht.

2. Lamellenwand nach Anspruch 1, dadurch gekennzeichnet, daß einander benachbarte Lamellen (4) sich in ihren Schließstellungen etwas überlappen.

3. Lamellenwand nach Anspruch 2, dadurch gekennzeichnet, daß die Lamellen (4) in ihren Überlappungsbereichen zur Erzielung einer glatten Oberfläche der Lamellenwand (3) ineinandergreifend profiliert sind.

4. Lamellenwand nach einem der Ansprüche 1 bis 3, dadurch gekennzeichnet, daß der Antrieb ein Drehantrieb (8) ist, der über einen doppelseitigen Antriebsriemen (10), vorzugsweise Zahnriemen, einander benachbarten Lamellen (4) zugeordnete Riemenscheiben (11) in wechselnder Folge an entgegengesetzt weisenden Umfangsbereichen mit Schwenkmomenten beaufschlagt.

5. Lamellenwand nach Anpruch 4, dadurch gekennzeichnet, daß die Riemenscheiben (11) einander benachbarter Lamellen (4) unterschiedliche Durchmesser haben.

6. Lamellenwand zur Einstellung unterschiedlicher Luftdurchströmungen, insbesondere für die Kühlluftzuführung zur Antriebsmaschine eines Fahrzeugs, mit mehreren Lamellen, die mittels im Bereich der Lamellenlängsachsen angreifender individueller, paralleler und in einem starren Rahmen gelagerter Schwenkachsen und eines den Lamellen gemeinsamen Schwenkantriebs zwischen maximalen Öffnungsstellungen - dann existieren zwischen einander benachbarten Lamellen Strömungsspalte maximaler Spaltweite - und Schließstellungen - dann existieren zwischen einander benachbarten Lamellen keine Strömungsspalte - in dem Rahmen schwenkbar sind, insbesondere nach einem der Ansprüche 1 bis 5, dadurch gekennzeichnet, daß zumindest einzelne Lamellen (4) an zumindest einer Längskante (6) mit einer Heizeinrichtung (7), vorzugsweise einem Heizdraht, ausgerüstet sind.
